# EUROPEAN PATENT APPLICATION

(11) **EP 4 425 285 A1**
(43) Date of publication of application: **04.09.2024**
(21) Application number: 23159032.4
(22) Date of filing: 28.02.2023
(51) Int. Cl.: G05B 19/418

(54) **AUTOMATIC COMMUNICATION ESTABLISHMENT BETWEEN COMPONENTS OF AN INDUSTRIAL AUTOMATION SYSTEM**

(71) Applicant: Siemens Aktiengesellschaft, 80333 München (DE)
(72) Inventor: NAIR, Ranjith A.U., 560102 Bangalore (IN); R, Kannan, 560103 Bangalore, Karnataka (IN); DEB, Priyanka, 560102 Bangalore (IN); HELLER, Matthias, 90475 Nürnberg (DE)
(74) Representative: Isarpatent

(57) **Abstract**

A system and method for establishing a communication relationship between components of an industrial automation system are disclosed. The method comprises identifying a plurality of communication partners for a first component and selecting a suitable communication partner from the identified plurality of communication partners. The suitable communication partner includes a second component. The method further comprises establishing the communication relationship between the first component and the second component of the selected suitable communication partner, wherein the communication relationship is established using an open platform communications united architecture (OPC UA).

## Description

The present disclosure generally relates to an industrial automation system, and more particularly to establish a communication relationship between components of the industrial automation system.

An industrial automation system is often used to automate processes and operations in industrial facilities. Automation systems can range from simple, single-task systems to complex, multi-task systems that are capable of controlling a wide range of tasks. The automation systems typically comprise sensors, actuators, and control devices. The control devices such as programmable logic controller (PLCs) receive measurements of components used in industrial processes from the sensors and generate control signals for the actuators in order to control industrial systems or processes or industrial functions. The PLCs are generally connected to one another or other devices via a communication network, to interact and gain valuable insights into the performance of the components such as machines, robots, conveyors, operator stations, or the like that are often organized into assembly lines to perform the industrial function.

In an example of a bottle assembly plant facility, where a plurality of assembly lines, such as a bottle cleaning unit, a bottle labeling unit, a bottle filling unit, and a bottle packaging unit, are configured for the final product, each assembly line includes multiple components that work simultaneously to perform respective functions. These components may be from the same vendor or different vendors. In case of different vendors, communication relationships between these components are required to be carried out in a planned way to achieve seamless integration of these components.

Further, when one assembly line is finished with a certain task, the assembly line passes the task on to the next assembly line via the communication network or some other communication mean such as open platform communication united architecture (OPCUA). In case of multiple assembly lines, it becomes difficult to select a suitable communication partner among all the available assembly lines automatically and establish the communication for completion of the industrial function. Therefore, there is a need for a system and method that can overcome the aforementioned drawbacks.

Conventionally, communication relationships are established by defining interface types manually, which is a tedious and time-consuming task. Furthermore, labour is also required for defining the interface types.

In light of the above limitations, there exists a need for a mechanism for selecting a suitable communication partner and establishing a communication relationship automatically.

The object of the present disclosure is achieved by a computer-based method for establishing a communication relationship between components of an industrial automation system. The method comprises identifying a plurality of communication partners for a first component. The method further comprises selecting a suitable communication partner from the identified plurality of communication partners. The suitable communication partner includes second component. Finally, the method comprises establishing the communication relationship between the first component and the second component of the selected suitable communication partner. The communication relationship is established using an open platform communications united architecture (OPC UA).

As used herein, each component is controlled by one are more programmable logic controllers (PLCs) or the communication partners.

Also, each of the one or more PLCs has user-defined OPC UA server interface and one or more compatible client interfaces.

In an embodiment, the plurality of communication partners are identified by performing steps that comprise capturing data related to an industrial plant. The captured data includes two-dimensional and three-dimensional design data and metadata of the industrial plant. As used herein, the captured two-dimensional and the three-dimensional design data includes electrical connections, location, site plan, and other architecture details of the industrial plant. The steps further comprise determining geometric structure of location of the first component and each communication partner and their sequences from the captured data. The determined geometric structure of the location and the sequences of each communication partner and of the first component are stored as a semantic knowledge graph. The steps further comprise generating a navigation graph using a topological model enhanced with determined geometric structure and semantics. The navigation graph here refers to a graph that provides graphical representation of location of different components associated with the plurality of communication partners. The step further comprises identifying the plurality of communication partners for the first component.

In an embodiment, the suitable communication partner is selected from the identified plurality of communication partners by utilizing a machine learning model to determine the suitable communication partner and by determining the navigation path between the first component and the second component of the suitable communication partner in a semantic knowledge graph. As used herein, the machine learning model determines the suitable communication partner based on distance of each communication partner of the identified plurality of communication partners from the first component.

In an embodiment, the communication partner which is nearest to the first component is determined as the suitable communication partner.

In an embodiment, the shortest navigation path between the first component and the second component of the suitable communication partner is determined by computing lowest possible cost.

In an embodiment, the cost depends on number of components traversed to reach the second component of the suitable communication partner from the first component. In particular, the cost to reach the second component from the first component via a component x is computed using a plurality of parameters comprising cost to reach the component x from the first component and approximated cost to reach the second component from the component x.

As used herein, the cost is computed using a task specific heuristic.

In an embodiment, the automatic connection establishing unit is utilized as an application programming interface (API) for selecting the suitable connection machine.

In another object of the present invention, a system for establishing a communication relationship between components of an industrial automation system is provided. The system comprises one or more processing units. The system further comprises a memory unit coupled to the one or more processing units. The memory unit comprises a plurality of units stored in the form of machine-readable instructions executable by the one or more processing units. The plurality of units comprises an identification unit which is configured for identifying a plurality of communication partners for a first component. The plurality of units further comprises an automatic connection establishing unit, which is configured for selecting a suitable communication partner from the identified plurality of communication partners. Here, the suitable communication partner includes a second component. The plurality of units further comprises a component connection unit, which is configured for establishing the communication relationship between the first component and the second component of the selected suitable communication partner. Here, the communication relationship is established using an open platform communications united architecture (OPC UA).

In still another object of the present invention, a computer-program product having machine-readable instructions stored therein, which when executed, cause the one or more processing units to perform the aforementioned method steps.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol and its several details can be modified in various obvious respects, all without departing from the scope of the present disclosure. The above-mentioned and other features of the present disclosure will now be addressed with reference to the accompanying drawings of the present invention. The illustrated embodiments are intended to illustrate, but not limit the invention. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1: illustrates a block diagram of a system for establishing a communication relationship between components of an industrial automation system, in accordance with an embodiment of the present disclosure;
- FIG 2: illustrates a block diagram depicting the system capturing data related to an industrial plant, in accordance with an embodiment of the present disclosure;
- FIG 3: is a flowchart of a method for establishing the communication relationship between two components of the industrial automation system, in accordance with an embodiment of the present disclosure;
- FIG 4: is a flowchart of a method for identifying a plurality of communication partners for a first component, in accordance with an embodiment of the present disclosure;
- FIG 5: illustrates a block diagram of the system in a network environment, in accordance with an embodiment of the present disclosure; and
- FIG 6: is a prototype for establishing a communication relationship between components of an industrial automation system, in accordance with an embodiment of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It is apparent, however, to one skilled in the art that the embodiments of the present disclosure may be practiced without these specific details or with an equivalent arrangement. In other instances, well-known structures and devices are shown in block diagram form in order to avoid unnecessarily obscuring the embodiments of the present disclosure.

Before beginning a more detailed discussion of the various aspects of the illustrative embodiments, it should first be appreciated that throughout this description the term "mechanism" or "method" will be used to refer to aspects of the present disclosure that perform various operations, functions, and the like. A "mechanism," as the term is used herein, may be an implementation of the functions or aspects of the illustrative embodiments in the form of a system, a method, or a computer program product. In the case of a method, the method steps are implemented by one or more devices, apparatus, computers, data processing systems, or the like.

In the case of a computer program product, the logic represented by computer code or instructions embodied in or on the computer program product is executed by one or more hardware devices in order to implement the functionality or perform the operations associated with the specific "mechanism." Thus, the mechanisms described herein may be implemented as specialized hardware, software executing on general-purpose hardware, software instructions stored on a medium such that the instructions are readily executable by specialized or general purpose hardware, a procedure or method for executing the functions, or a combination of any of the above.

In addition, it should be appreciated that the following description uses a plurality of various examples for various elements of the illustrative embodiments to further illustrate example implementations of the illustrative embodiments and to aid in the understanding of the mechanisms of the illustrative embodiments. These examples intended to be non-limiting and are not exhaustive of the various possibilities for implementing the mechanisms of the illustrative embodiments. It will be apparent to those of ordinary skill in the art in view of the present description that there are many other alternative implementations for these various elements that may be utilized in addition to, or in replacement of, the examples provided herein without departing from the spirit and scope of the present invention.

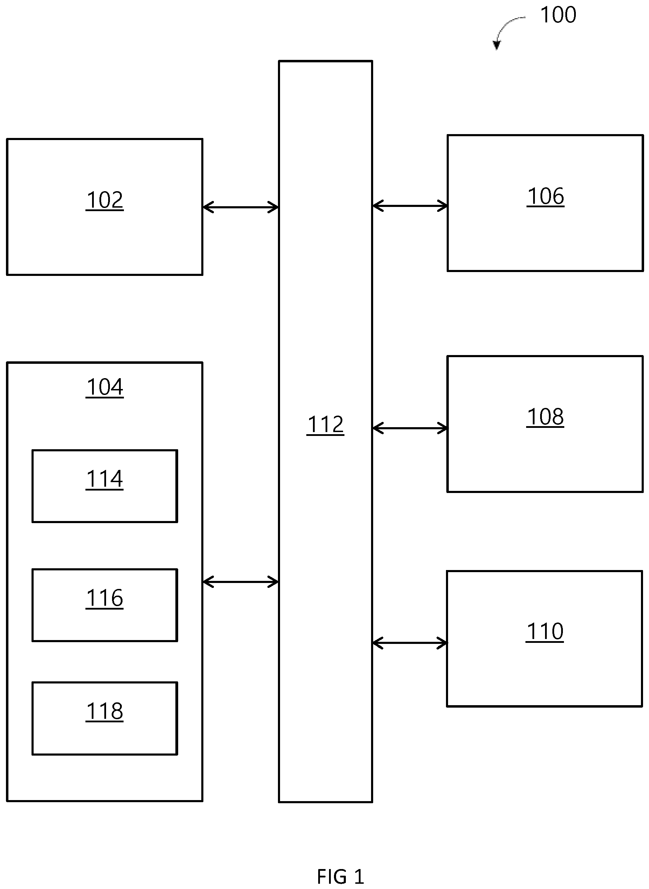

FIG 1 illustrates a block diagram of a system 100 for establishing a communication relationship between components of an industrial automation system, in accordance with an embodiment of the present disclosure. The system 100 may be utilized in an industrial plant having multiple assembly lines. The system 100 may be a computing system such as a personal computer, a laptop, a tablet, and the like. In one embodiment, the system 100 comprises one or more processing units 102, a memory unit 104, an input unit 106, an output unit 108, a storage unit 110, and a system bus 112.

The one or more processing units 102, as used herein is a digital circuit or a type of computational circuit such as but not limited to a microprocessor, microcontroller, graphics processor, digital signal processor, embedded controller, application specific integrated circuits, single chip computers or any other type of processing circuit. The one or more processing units 102 are configured to receive one or more instructions from the memory unit 104 and further configured to execute the received instruction to implement mechanism of the present invention.

The memory unit 104 as used herein is configured for storing data and/or machine-readable instructions executable by the one or more processing units 102. The memory unit 104 may be a volatile memory such as but not limited to Random Access Memory (RAM) and a nonvolatile memory such as Read-Only Memory (ROM), flash Memory, etc. or any combination thereof. In the present embodiment, the memory unit 104 comprises a plurality of units stored in the form of machine-readable instructions executable by the one or more processing units 102. In another embodiment, the functions of these units may be implemented in a combined form, in which some functions of these units may be implemented by executing machine-readable instructions and some functions are implemented by hardware. The plurality of units includes an identification unit 114, an automatic connection establishing unit 116, and a component connection unit 118.

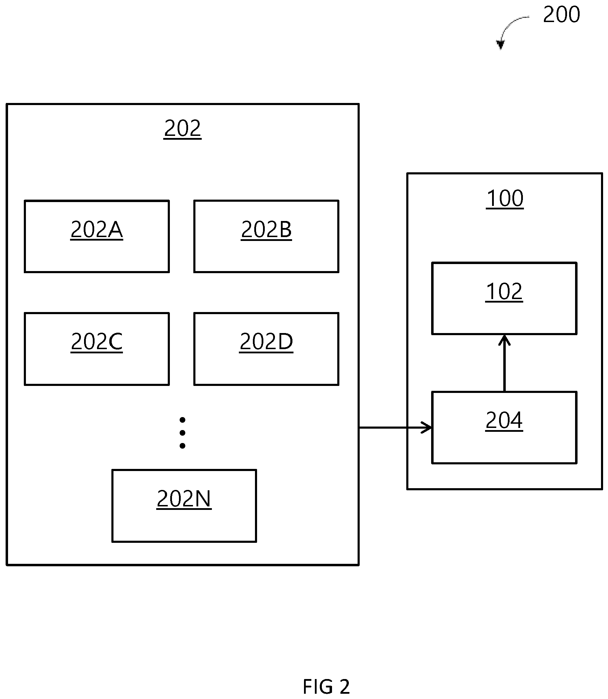

The identification unit 114 when executed by the one or more processing units 102 causes the one or more processing units 102 to capture data related to an industrial plant 202 from a design and drafting tool 204 such as AutoCAD, SOLIDWORKS, Solid Edge, etc., as illustrated in FIG 2. The design and drafting tool 204 creates a two dimensional or three dimensional models with detailed documentation such as materials used, dimensions and also details of the design process. Referring to FIG 2, the industrial plant 202 has multiple assembly lines 202A, 202B, 202C, 202D...202N and each assembly line utilizes multiple components such as machines, robots, conveyors, operator stations, etc. Further, each assembly line is controlled by one or more programmable logic controllers (PLCs). In an additional embodiment, each assembly line is controlled by one or more process automation controllers (PACs) or industrial PCs (IPCs). In one embodiment, the one or more PLCs uses open platform communications united architecture OPC UA for establishing the interconnection between the assembly lines. In other words, each of the one or more PLCs has user-defined OPC UA server interface and one or more compatible client interfaces for establishing the interconnection.

The design and drafting tool 204 is configured for providing the two-dimensional and the three-dimensional design data including electrical connections and location of each component utilized in the assembly lines 202A, 202B, 202C, 202D ... 202N in the industrial plant 202, site plan for providing detail such as arrangement of the assembly lines and their respective components, work areas and service areas under the boundary of a building of the industrial plant 202, and other architecture details and metadata of the industrial plant 202. In one embodiment, the design and drafting tool 204 is a software tool stored in the memory of the system 100, which when executed by the one or more processing units 102 provides the two-dimensional and the three-dimensional design data related to the industrial plant 202.

After capturing the data, the one or more processing units 102 determine geometric structure of location of the component of the assembly line for which a suitable communication partner is required to be selected (the component herein referred as a first component). The one or more processing units 102 are further configured to determine geometric structure of location of each communication partner of the first component in the industrial plant 202 from the captured data. According to an embodiment herein, a communication partner refers to an assembly line that is capable of establishing the communication. The assembly line is capable for establishing the communication only when the component of the assembly line has the compatible interfaces as of the first component.

The one or more processing units 102 are further configured to determine the arrangement of each communication partner in a successive order from the captured data and store the determined geometric structure of the location and the sequences of each communication partner and of the first component as a semantic knowledge graph in the storage unit 110. In other words, the semantic knowledge graph represents the geometric structure of the location of the first component and each communication partner and illustrates relationship between the first component and each communication partner.

The one or more processing units 102 further generate a navigation graph enhanced with determined geometric structure and semantics. The navigation graph is an embedded graph that provides underlying structure to support navigational guidance. The navigation graph generally includes nodes to represent the first component and communication partners and edges to represent paths or directions of travel from one node to another node. In one embodiment, the navigation graph is generated using a topological model, which is an imitation-learning based navigation graph. Thereafter, the one or more processing units 102 identify a plurality of communication partners for the first component.

The automatic connection establishing unit 116, when executed by the one or more processing units 102, causes the one or more processing units 102 to select a suitable communication partner from the identified plurality of communication partners. In one embodiment, the automatic connection establishing unit 116 is utilized as an application programming interface (API) for selecting the suitable communication partner. The suitable communication partner is selected from the identified plurality of communication partners by utilizing a machine learning model to determine the suitable communication partner. In one embodiment, the machine learning model determines the suitable communication partner based on distance of each communication partner of the identified plurality of communication partners from the first component and the communication partner that is nearest to the first component is determined to be the suitable communication partner. In another embodiment, a real time and rule based approach is used for identifying the communication partner that is nearest to the first component by computing distance between the first component and each communication partner of the identified plurality of communication partners. After successful determination of the suitable communication partner, one or more search algorithms including at least one of but not limited to Dijkstra algorithm and an A-star algorithm are executed by the one or more processing unit 202 to determine shortest navigation path between the first component and second component of the suitable communication partner in a semantic knowledge graph.

The component connection unit 118, when executed by the one or more processing units 102, cause the one or more processing units 102 to establish a communication relationship between the first component and the second component of the selected suitable communication partner automatically. Advantageously, the communication establishment between the first component and the second component which is at a smaller distance from the first component saves time and provides a cost-effective method of performing the industrial process.

The input unit 106 may include input means such as but not limited to keypad, touchpad, camera, and microphone, to enable user to input at least a command, data, etc. in the system 100. The output unit 108 includes a mean such as a graphical user interface, monitor, display etc. for displaying output received from the one or more processing units 102 on executing the plurality of units stored in the memory unit 104. The storage unit 110 may be a non-transitory storage medium which stores the semantic knowledge graph generated on executing the identification unit 114 by the one or more processing units 102.

The system bus 110 may include a bus memory or bus memory controller, a peripheral bus, and a local bus capable of interacting with any other bus architecture. The system bus 110 is further capable of allowing interconnection among the one or more processing units 102, the memory unit 104, the input unit 106, the output unit 108, and the storage unit 110. Those of ordinary skill in the art will appreciate that the system 100 illustrated in FIG 1 is provided for the purpose of explanation only and is not meant to imply architectural limitations with respect to the present disclosure. Further, several modifications to the system shown in FIG 1 may be implemented without departing from the spirit and scope of the present invention. For example, other peripheral devices such as Local Area Network (LAN)/ Wide Area Network (WAN)/ Wireless (e.g., Wi-Fi) adapter, graphics adapter, an optical disk drive, disk controller, input/output (I/O) adapter may also be used in addition to the components depicted in the figure.

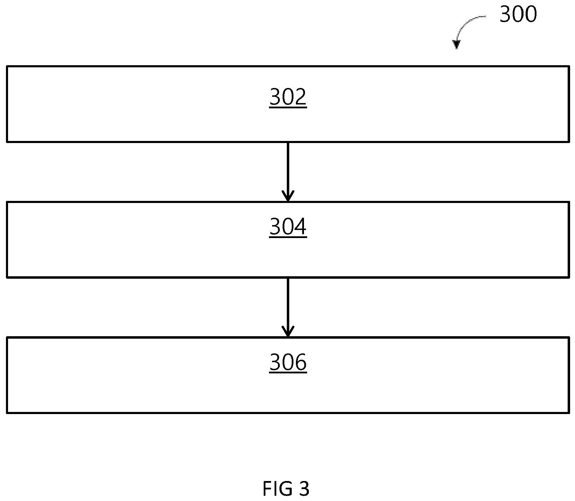

FIG 3 is a flowchart of a method 300 for establishing a communication relationship between two components of the industrial automation system, in accordance with an embodiment of the present disclosure. As will be discussed in greater detail hereafter, the illustrative embodiments are integrated to establish the communication relationship between the first component of the assembly line, for which the suitable communication partner is required to be selected, and the second component of the selected suitable communication partner, when a plurality of communication partners are available for the first component. That is, the mechanisms of the illustrative embodiments provide a facility of establishing the communication relationship between the first component and the second component of the suitable communication partner automatically.

Thus, in order to understand the context in which the communication relationship between the first component and the second component of the suitable communication partner is established, it is important to first have an understanding of how connection is implemented before describing the method of the illustrative embodiments integrated to augment performance of the industrial automation system. In particular, the method described herein is generally applicable to any industrial process involving multiple assembly lines in which, for a single assembly line, multiple assembly lines are available for establishing the communication relationship and, in order to determine a suitable communication partner.

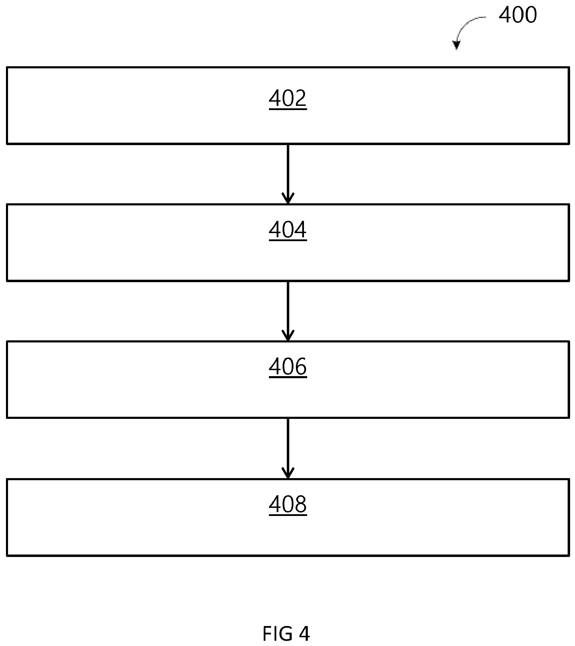

Accordingly, the method 300 begins at step 302 with the identification of a plurality of communication partners for a first component. The first component refers to a component that is either defined by the user or based on its position in the site plan. In an exemplary embodiment, the method 300 may be used in a bottle assembly shop floor having a plurality of assembly lines including a bottle filling assembly line, a bottle washing assembly line, a bottle labeling assembly line, and a bottle packing assembly line to establish communication between assembly lines automatically. At first, the method 300 may determine the plurality of communication partners for the first component of the bottle filling assembly line that is a bottle filling machine, the plurality of communication partners may include a bottle washing machine, a bottle labeling machine, and a bottle packing machine, among others. In an embodiment, each component is controlled by one or more programmable logic controllers (PLCs) or the communication partners. In an exemplary embodiment, the PLC is programmed to control the functioning of the bottle filling machine, which includes controlling the amount of liquid to be filled in the bottle, the temperature and pressure to be used while filling the liquid, and so on. Similarly, the bottle washing machine is controlled by the PLC in terms of the type of liquid to be used for washing the bottle, the amount of liquid required for a complete wash of the bottle, and so forth. In case of the bottle labeling machine, the PLC is configured to control the functioning of the machine in terms of applying the label in the standard location on the bottle, size of the label, and so forth. In yet another case of the bottle packing machine, the PLC controls the functioning of the bottle packing machine in terms of dimensioning of packaging material to be used for packing the bottle, etc. It should be noted that the PLC is an industrial computer control system that continuously monitors the state of components and makes decisions based on a custom program to control state of the components. Advantageously, the PLC is used to standardize the production process. Almost any assembly line or industrial function, or process can be greatly enhanced using this type of control system. Another advantage in using the PLC is the ability to change and replicate the operation or process while collecting and communicating vital information. The identification of the plurality of communication partners for the first component may be explained in conjunction with FIG 4.

Referring to FIG 4, data related to the industrial plant is captured, at step 402. In an embodiment, the captured data includes two-dimensional and three-dimensional design data such as but not limited to electrical connections, location, site plan, and other architecture details of the industrial plant and metadata of the industrial plant. For example, the captured data includes electrical connections of the bottle filling machine, the bottle washing machine, the bottle labeling machine, and the bottle packing machine present in the shop floor, location of these machines, and their arrangement in the shop floor, etc. Successively, geometric structure of location of the first component and each communication partner and their sequences from the captured data is determined, at step 404. In one embodiment, the location of the first component and each communication partner and their sequences is generated by a machine learning method that parses and classifies the captured data into plurality of objects and then determines the location and sequences from the classified objects. In an embodiment, the determined geometric structure of the location and the sequences of each communication partner and of the first component are stored as a semantic knowledge graph in the storage device. In other words, the semantic knowledge graph is generated using location of the first component and positional arrangement of other components with respect to the first component. Successively, a navigation graph is generated using a topological model enhanced with determined geometric structure and semantics, at step 406. In an exemplary embodiment, the navigation graph provides graphical representation of location of the bottle washing machine, the bottle labeling machine, and the bottle packing machine which are associated with the plurality of communication partners for the bottle filling machine. Finally, the plurality of communication partners is identified, at step 408, for the first component. Advantageously, the plurality of communication partners are identified by utilizing navigation graph generated using geometric structures and semantics extracted without manual intervention and therefore, larger number of projects can be undertaken.

After, successful identification of the plurality of communication partners, a suitable communication partner is selected, at step 304, from the identified plurality of communication partners. In one embodiment, the selection of the suitable communication partner is performed by the automatic connection establishing unit 116. The automatic connection establishing unit 116 uses the machine learning model to determine the suitable communication partner from the identified plurality of communication partners and one or more search algorithms to determine the navigation path between the first component and the second component of the suitable communication partner in a semantic knowledge graph.

The machine learning model may determine the suitable communication partner based on distance of the first component from identified each communication partner. The communication partner which is nearest to the first component is determined as the suitable communication partner. In an exemplary embodiment, the automatic connection establishing unit determines the bottle washing machine as the suitable communication partner which is positioned at a smaller distance from the bottle filling machine. The one or more search algorithms determine shortest navigation path between the first component and the second component of the suitable communication partner. In one embodiment, the shortest navigation path is determined by computing lowest possible cost. In one exemplary embodiment, Dijkstra algorithm is used for determining the shortest navigation path. In another exemplary embodiment an A-star algorithm is used for determining the shortest navigation path. The A-star algorithm generally determines the navigation path of lowest possible cost between two components. The cost is generally computed using a task specific heuristic. Heuristics are problem-solving techniques that provide practical, quick solutions for computing cost, often in a shorter time frame than classical methods. There are several heuristic techniques such bidirectional search, simulated annealing, hill climbing, best first search and A-star. Advantageously, A-star is used for computing the cost by finding the shortest path through search space using approximated cost or heuristic function. In one embodiment, the cost depends on number of components traversed to reach the second component of the suitable communication partner from the first component and is computed by adding cost for reaching the component x from the first component with the approximated cost for reaching the second component from the component x.

Thereafter, the communication relationship is established, at step 306, between the first component and the second component of the selected suitable communication partner. In an exemplary embodiment the PLC uses open platform communications united architecture OPC UA for establishing the interconnection between the bottle filling machine and the bottle washing machine. The PLC has user-defined OPC UA server interface and one or more compatible client interfaces. Advantageously, the communication relationship is established automatically, thus reduces labour of the engineer and the time required to establish communication. Furthermore, less expertise is required from the engineer. In one embodiment, the communication relationship is established using an open platform communications united architecture (OPC UA). In another embodiment, the communication relationship is established using any other communication mean.

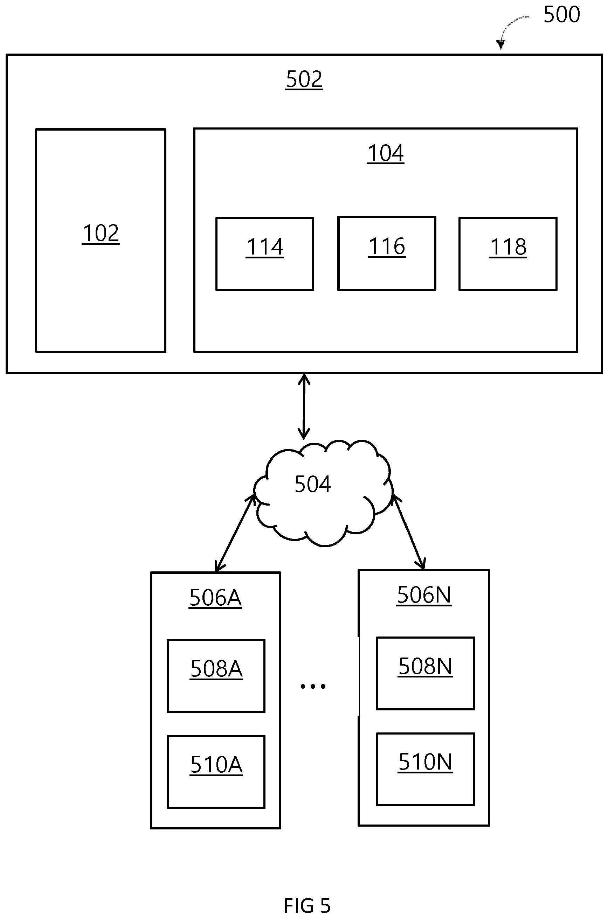

Referring now to FIG 5, a block diagram of the system in a network environment is illustrated, in accordance with an embodiment of the present disclosure. As illustrated, the system 500 includes a server 502 and a plurality of client devices 506A-N. Each of the client devices 506A-N is connected to the server 502 via a communication network 504 such as a Local Area Network (LAN), a Wide Area Network (WAN), Wi-Fi, etc. The server includes the one or more processing units 102 and the memory unit 104, wherein the plurality of units 114, 116, and 118 reside in the memory of the server 502 and is accessed by the client devices 506A-N via the network 504.

The plurality of units 114, 116, and 118 when executed by the one or more processing units 102, causes the one or more processing units 102 to perform the invention as described in greater detail in FIGs 2 to 4. In an additional embodiment, the server 502 may include a network interface for communicating with the client devices 506A-N via the network 504. Each of the client devices 506A-N is provided with input units 508A-N and display units 510AN. Users of the client devices 506A-N can access the server 502 via the input units 508A-N. In an exemplary operation, a user of the client device 506A may send a request through the input unit 508A to the server 502 to establish a communication relationship between two components of the industrial automation system.

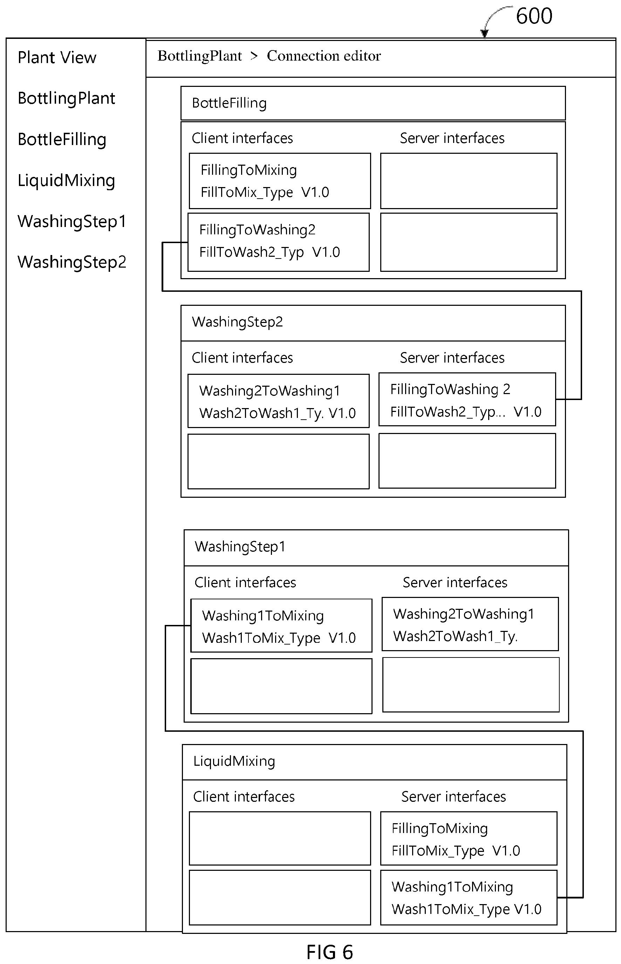

Referring now to FIG 6, a prototype for establishing a communication relationship between components of an industrial automation system is illustrated, in accordance with an embodiment of the present disclosure. As illustrated, data about the Bottling plant having four assembly lines named bottle filling, liquid mixing, washing step 1, and washing step 2 is captured by the system 100, and communication relationships are established automatically for performing the industrial function accordingly. As illustrated the system 100 determines the suitable communication partner for bottlefilling and establishes the communication between the client interface of bottlefilling with server interface of the WashingStep2 for performing washing function after filling the bottle. Similarly, the system 100 establishes the communication between the client interface of WashingStep1 with server interface of the LiquidMixing for performing liquid mixing after washing step 1.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope.

**Reference Numerals**

| | |
|---|---|
| system | 100 |
| one or more processing units | 102 |
| memory unit | 104 |
| input unit | 106 |
| output unit | 108 |
| storage unit | 110 |
| system bus | 112 |
| identification unit | 114 |
| automatic connection establishing unit | 116 |
| component connection unit | 118 |
| industrial plant | 202 |
| assembly line | 202A |
| assembly line | 202B |
| assembly line | 202C |
| assembly line | 202D |
| assembly line | 202N |
| design and drafting tool | 204 |
| method | 300 |
| step | 302 |
| step | 304 |
| step | 306 |
| method for identifying communication partners | 400 |
| step | 402 |
| step | 404 |
| step | 406 |
| step | 408 |
| system in a network environment | 500 |
| server | 502 |
| communication network | 504 |
| client devices | 506A-N |
| input units | 508A-N |
| display units | 510A-N |
| prototype | 600 |

## Claims

1. A computer-implemented method for establishing a communication relationship between components of an industrial automation system, the method comprising:
- identifying, by one or more processing units [102], a plurality of communication partners for a first component of the industrial automation system;
- selecting a suitable communication partner from the identified plurality of communication partners, wherein the suitable communication partner includes a second component; and
- establishing the communication relationship between the first component and the second component of the selected suitable communication partner, wherein the communication relationship is established using an open platform communications united architecture (OPC UA).

2. The method according to claim 1, wherein each component is controlled by one or more programmable logic controllers (PLCs) or communication partners.

3. The method according to claim 2, wherein each of the one or more PLCs has user-defined OPC UA server interface and one or more compatible client interfaces.

4. The method according to claim 1, wherein the plurality of communication partners are identified by performing steps that comprise:
- capturing data related to an industrial plant, wherein the captured data includes two-dimensional and three-dimensional design data and metadata of the industrial plant;
- determining geometric structure of location of the first component and each communication partner and their sequences from the captured data, wherein the determined geometric structure of the location and the sequences of each communication partner and of the first component are stored as a semantic knowledge graph;
- generating a navigation graph using a topological model enhanced with determined geometric structure and semantics; and
- identifying the plurality of communication partners for the first component.

5. The method according to claim 4, wherein the captured two-dimensional and the three-dimensional design data includes electrical connections, location, site plan, and other architecture details of the industrial plant.

6. The method according to claim 4, wherein the navigation graph provides graphical representation of location of different components associated with the plurality of communication partners.

7. The method according to claim 1, wherein the suitable communication partner is selected from the identified plurality of communication partners by determining the suitable communication partner based on distance of each communication partner of the identified plurality of communication partners from the first component and by determining the navigation path between the first component and the second component of the suitable communication partner in a semantic knowledge graph.

8. The method according to claim 7, wherein the communication partner which is nearest to the first component is determined as the suitable communication partner.

9. The method according to claim 7, wherein the shortest navigation path is determined between the first component and the second component of the suitable communication partner by computing lowest possible cost.

10. The method according to claim 9, wherein the cost to reach the second component from the first component via a component x is computed using a plurality of parameters comprising cost to reach component x from the first component and an approximated cost to reach the second component from the component x, wherein the cost depends on number of components traversed to reach the second component of the suitable communication partner from the first component.

11. The method according to claim 9, wherein the cost is computed using a task specific heuristic.

12. The method according to claim 1, wherein the automatic connection establishing unit [116] is utilized as an application programming interface (API) for selecting the suitable connection partner.

13. A system (100) for establishing a communication relationship between components of an industrial automation system, the system (100) comprising:
- one or more processing units [102]; and
- a memory unit [104] coupled to the one or more processing units [102], wherein the memory unit [104] comprises a plurality of units stored in the form of machine-readable instructions executable by the one or more processing units (102), wherein
- an identification unit [114] is configured for identifying a plurality of communication partners for a first component of the industrial automation system;
- an automatic connection establishing unit [116] is configured for selecting a suitable communication partner from the identified plurality of communication partners, wherein the suitable communication partner includes a second component; and
- a component connection unit [118] is configured for establishing the communication relationship between the first component and the second component of the selected suitable communication partner, wherein the communication relationship is established using an open platform communications united architecture (OPC UA).

14. A computer-program product having machine-readable instructions stored therein, which when executed by one or more processing units (102), cause the one or more processing units (102)to perform a method according to any of the claims 1 to 12.
